# EUROPEAN PATENT SPECIFICATION

(11) **EP 1 331 351 B1**
(45) Date of publication and mention of the grant of the patent: **26.07.2006**
(21) Application number: 03010108.3
(22) Date of filing: 24.04.1997
(51) Int. Cl.: E06B 9/04

(54) **Child safety barrier**
Sicherheitsbarriere für Kinder
Barrière de sécurité pour enfants

(30) Priority: 24.04.1996 DK 49496
(43) Date of publication of application: 30.07.2003
(62) Divisional of application: 97919300.0
(73) Proprietor: Baby Dan A/S, 8670 Lasby (DK)
(72) Inventor: Andersen, Finn, 8670 Lasby (DK)
(74) Representative: Larsen, Hans Ole

(56) References cited:
- GB-A- 2 271 603
- US-A- 5 367 829
- US-A- 5 396 732

## Description

The present invention relates to a child safety barrier comprising a frame having a base member with an upright post member, and by the upper end of said upright post member a short upper rod reaching to the one side of the child safety barrier, a gate hinged to the base member and also hinged to the upper end of the upright post member opposite the short upper rod, whereby the gate comprises a closing mechanism, said closing mechanism comprising a pivotal handle having side plates and whereby said handle is adapted to move a threaded bar, under influence of a sliding element on which the threaded bar is mounted, whereby said threaded bar is terminated by a friction block, and clamps the friction block against an opening.

Child safety gates are used as a temporary barrier of doorways, stairways, windows, and similar openings to deny small children and animals access by inserting and securing the barrier in the opening.

There are known child safety barriers which comprise a frame with a central gate and there are also known barriers, where the gate is located at one side thereof.

US patent no. 5367829 discloses a child safety barrier having a handle with a spring loaded blocking button, said handle being used to operate two bumpers in order to open or close the barrier.

US patent no. 5396732 discloses a child safety barrier of the type defined in the introductory part of claim 1.

The purpose of the invention has been to make these gates safer. Accordingly, by the invention there has been provided a barrier that has a special closing mechanism having an extra protection against unintended opening.

The purpose is achieved by a child safety barrier of the type stated in the introductory part of claim 1, which is characterized in that the pivotal handle is blocked by means of a spring loaded blocking knob arranged in an element in the shape of a flat plastic block that is fixed between a projecting end of the upper rod and a parallel flat iron welded to a front rod, said plastic block having a cross hole defining an axis for rotation of the handle, said blocking knob being designed as an entity with the plastic block and placed directly against the side plates or being designed as a spring loaded loose knob embedded in a recess in the plastic block, and which grips into a hole in the side plate of the handle.

Expedient embodiments of the invention are defined in claims 2 - 5.

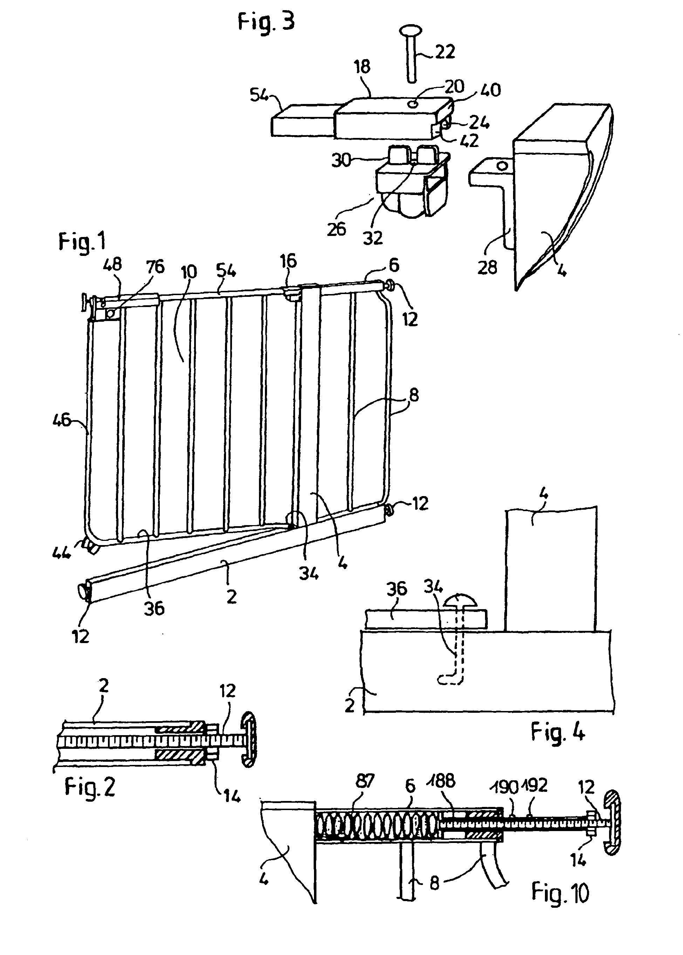

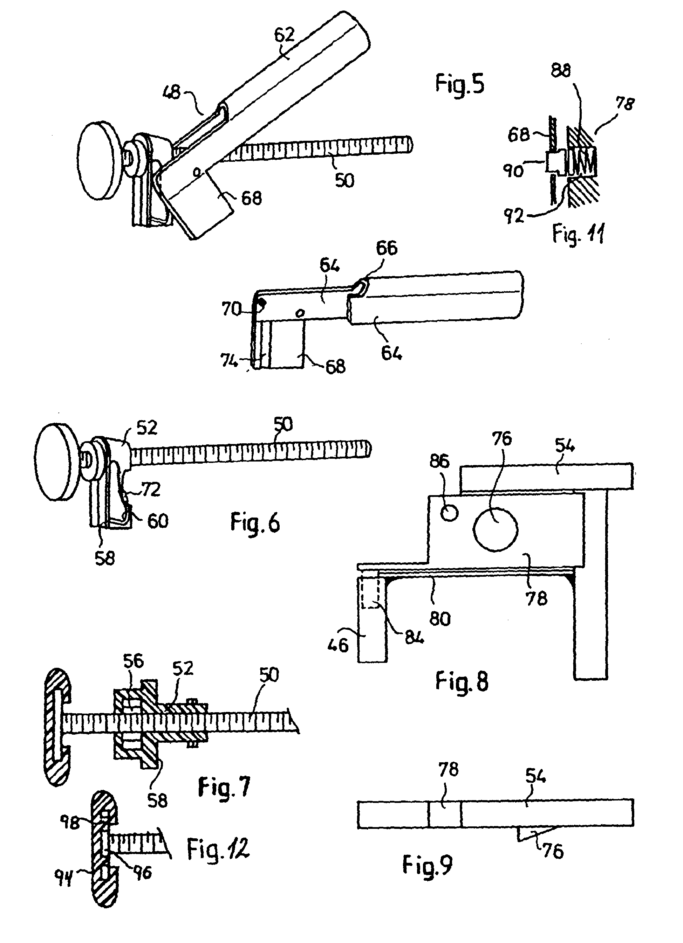

Embodiments of the invention shall be explained further below with reference to the enclosed drawings comprising the figures 1-12.

The child safety barrier includes a frame comprising a base member 2 with an upright post member 4 and by the upper end of this a short upper rod reaching to the one side. The space between the upper and base member is filled up with vertical rods. On the other side of the post a gate 10 is hinged.

For fastening of the barrier in the opening there is in each corner of the plane of the barrier, i.e. in both ends of the base member 2 and the free end of the upper member, a threaded rod 12 with a friction block, said threaded rods can be pulled in and out and fixed by means of a counter nut 14 so that the length can be adjusted to the size of the actual opening.

The gate comprises a closing mechanism which also has a corresponding threaded bar with a friction block which can be pulled in and out and fixed with a counter nut, and which by means of the closing mechanism can be clamped against the opening.

At the top the gate is hinged to the post by means of a specially designed hinge 16. A substantially tube shaped hinge part 18 of plastic with a hole 20 for a pivot 22 is mounted over the upper rod of the gate. At this location the hinge part is solid. On the lower part of the hinge part there is a slot 24. The other hinge part 26 is attached to the post 4, on to which an angle 28 is welded. The hinge part has a pocket, by means of which this can be slipped in over the perpendicularly projecting flap of the angle on the post. On the upper part of the hinge part there is a fin 30 projecting upwards, which fits loosely up into the slot 24 on the other hinge part. There is also a through-going hole 32 for the pivot 22. The hole is carried through the angle so that the hinge part is fixed by means of the pivot 22. On the lower side of the hinge part the hole is continued in a tube section and at the back there is a contact surface facing the post or more precisely the angle. Furthermore, there is a reinforcing rib. The pivot 22 is attached by tight fitting or by screwing it into the upper part 18 of the hinge, and in the closing position of the gate the pivot is still hidden in the hinge, i.e. the pivot does not project beneath the hinge.

At the bottom the gate is hinged to the base member by means of a pivot 34 situated through a hole in the bottom rod 36 of the gate further down through a hole in the top side of the base member 2 of the frame. The end of the pivot 34 is bent to the side so that it functions as a stop for pulling up the gate. The pivot is inserted by manipulating it through the hole in the bottom rod of the gate and further down into the bottom rod of the frame. The pivot 34 can be welded to the gate by the head.

To open the barrier the gate is lifted, whereby the upper part of the hinge is lifted clear of the fin 30 on the lower part 26. When the gate is swung open the upper part 18 will be riding on the fin 30. The vertical lift of the gate is as mentioned limited by the pivot 34 in the bottom hinging of the gate. In the closed position of the gate the hinge is fixed against sideways deflection as the fin 30 here is situated in the slot 24 on the under side of the upper part 18 of the hinge. Furthermore, the forces appearing in the upper member of the gate will be transmitted directly to the vertical post 4, as the rear edge of the upper hinge part is at the top shaped as an planar contact plane 40 for contact against the pillar, whereas the edge at the slot region is shaped as rounded sliding surfaces 42 situated within the contact plane. In the opening position the contact plane 40 is lifted above the pillar 4 and by swinging up the gate, the sliding surface 42 will slide upon the pillar. Altogether, the upper part of the barrier will in closed position stand as a nearly rigid through-going connection comprising the upper rod of the gate, the upper part of the pillar and the upper rod of the frame.

In closed position the front corner at the bottom of the gate is secured against deflection by means of a U-shaped fitting gripping around the top side of the base member 2. By lifting the gate for its opening, the fitting 44 goes clear of the base member. The fitting 44 is positioned on the rounding where the lower rod of the gate continues into the front rod 46, whereby the wedge-shaped space next to the base member is blocked so that children cannot get their toes or fingers caught in the gate.

As stated earlier, the gate comprises a closing mechanism 48, which also has a threaded bar 50 with a friction block. The thread block is situated in a through-going hole in a sliding element 52 and sticks with its end into the upper rod 54. In the element 52 a nut 56 is casted in so that the threaded bar can be screwed in and out to fit the actual size of an opening. At the front the element has a sideways projecting cross wall 58, to which in each side a recess with a camface 60 is contiguous. A handle 62 comprises two parallel sidewalls 64, which on the rear section are connected with a curved member 66 fitting the upper rod of the gate. At the front the sidewalls have a side plate with a projection 70 co-operating with the camface 60 in the recess on the element 52. When the handle 62 is closed, i.e. in horizontal position, the threaded bar and thereby the friction block are in their projecting locked position. By opening the gate the handle is turned, thus causing the pins 70 in co-operation with the camface to pull back the threaded bar with the friction block out of contact with the opening, in which the barrier is placed. The gate can then be lifted and opened as described previously. By closing the gate the handle is pushed downwardsthus causing the front edge of the sides 64 to press against the cross wall 58 of the element, whereby this is pushed forward to clamp the friction block against the opening. On the edge of the element there is a projection 72 co-operating with a slot 74 in the side plates. In closed position the projections are positioned in the slot. By lifting the handle to open the gate, the projections 72 will counteract this. Only with an extra firm grip on the handle will it be possible to swing it upwards as the sidewalls are thereby forced from each other and slide on top of the projections. Contrary the projections will cooperate in causing the handle to shut with a "snap effect" and to remain in the closed position. As an additional securing against opening of the gate, the handle is blocked by means of a spring loaded blocking knob 76 arranged in an element in the shape of a flat plastic block 78. This block is firmly fixed between a projecting end of the upper rod 54 of the gate and a parallel flat iron 80 welded to the front rod 46, which is a pipe, and the neighbour rod of the gate. The rear edge of the block is undercut and grips around the rod 46. At the front the block is fixed by means of a pin 84 which projects downwards into the pipe 46. The axis of rotation of the handle is embedded in a cross hole 86 in the block. The blocking knob 76 is designed as an entity with the plastic block and placed directly against the side plates 68 or designed as shown in fig. 11 as a spring-loaded 88 loose knob 90 embedded in a recess 92 in the plastic block 78, and which grips into a hole in the side plate 68 of the handle. The handle is thus blocked in the closed position. In order to open the gate two independent movements are thus necessary, i.e. pushing in the blocking knob 76 as well as lifting the handle. Furthermore, the entire gate has to be lifted. The gate is hereby effectively secured against unintended opening, and at the same time it is still easy to open for an adult person. Besides being an integrated part of the plastic block, the blocking knob can of course also be shaped as a separate spring loaded knob embedded in the plastic piece.

Due to the yielding of the opening where the barrier is placed, e.g. yielding banisters, it can be difficult to decide how hard the gate has to be clamped. For this purpose the upper rod of the frame is shaped as an indicator unit. In the rod 6 a spring is embedded affecting a pipe section 188, in which the threaded bar with the friction block is situated. On the pipe there are two indication marks 190, 192, the first showing the sufficient clamping of the frame itself, the second showing the sufficient clamping of the closing mechanism of the gate.

In order to improve the securing of the rubber or plastic coating 94 of the friction block on the supporting plate 96, this can be equipped with one or several holes 98, mainly three evenly distributed over the plate, and where the coating penetrates into the holes, cf. fig. 12. The coating is thus effectively secured against stripping off by sideways forces on the gate. This applies by loosely fixed coating as well as vulcanized coating.

## Claims

1. A child safety barrier comprising a frame having a base member (2) with an upright post member (4), and by the upper end of said upright post member (4) a short upper rod (6) reaching to the one side of the child safety barrier, a gate (10) hinged to the base member (2) and also hinged to the upper end of the upright post member (4) opposite the short upper rod (6), whereby the gate (10) comprises a further upper Rod (54) and a closing mechanism, said closing mechanism comprising a pivotal handle (62) having side plates (68) and whereby said handle (62) is adapted to move a threaded bar (50), under influence of a sliding element (52) on which the threaded bar (50) is mounted, whereby said threaded bar (50) is terminated by a friction block, and clamps the friction block against an opening, **characterized in that** the pivotal handle (62) is blocked by means of a spring loaded blocking knob (76, 90) arranged in an element in the shape of a flat plastic block (78) that is fixed between a projecting end of said upper rod (54) of the gate (10) and a parallel flat iron (80) welded to a front rod (46), said plastic block having a cross hole (86) defining an axis for rotation of the handle (62), said blocking knob (76) being designed as an entity with the plastic block (78) and placed directly against the side plates (68) or being designed as a spring loaded loose knob (90) embedded in a recess in the plastic block (78), and which grips into a hole in the side plate (68) of the handle (62).

2. A barrier according to claim 1, **characterized in that** the threaded bar (50) has in its end a friction part.

3. A barrier according to claims 1 - 2, **characterized in that** the threaded bar (50) carries a nut (56).

4. A barrier according to claims 1 - 3, **characterized in that** the sliding element (52) has a sideways projecting cross wall to which in each side a recess with a camface (60) is contiguous.

5. A barrier according to claim 4, **characterized in that** the handle has a projection (70) co-operating with the recesses in the sliding element (52).

## Patentansprüche

1. Sicherheitsbarriere für Kinder, umfassend einen Rahmen mit einem Basiselement (2) mit einem aufrechten Pfostenelement (4) und an dem oberen Ende des aufrechten Pfostenelements (4) mit einem kurzen oberen Stab (6), der zu einer Seite der Kinder-Sicherheitsbarriere ragt, eine Pforte (10), die an das Basiselement (2) sowie auch gegenüber dem kurzen oberen Stab (6) an das obere Ende des aufrechten Pfostenelements (4) angelenkt ist, wobei die Pforte (10) einen weiteren oberen Stab (54) und eine Schließeinrichtung umfasst, die einen Schwenk-Handgriff (62) mit Seitenplatten (68) aufweist, und wobei der Griff (62) zum Bewegen einer Gewindestange (50) unter Einfluss eines Gleitelements (52), an dem die Gewindestange (50) angebracht ist, eingerichtet ist, wobei die Gewindestange (50) durch einen Friktionsanschlag abgeschlossen ist und den Friktionsanschlag gegen eine Öffnung klemmt, **dadurch gekennzeichnet, dass** der Schwenkgriff (62) mittels eines federnden Sperrknopfes (76, 90) gesperrt wird, der in einem die Form eines flachen Kunststoffblockes (78) aufweisenden Element angeordnet ist, das zwischen einem hervorstehenden Ende des oberen Stabs (54) der Pforte (10) und einem parallelen flachen, an einen Vorderstab (46) angeschweißten Eisenstück (80) befestigt ist, wobei der Kunststoffblock mit einer Querbohrung (86) eine Achse zum Schwenkdrehen des Griffes (62) bestimmt, wobei der Sperrknopf (76) als Funktionseinheit mit dem Kunststoffblock (78) ausgebildet und direkt gegen die Seitenplatten (68) angeordnet oder als federbeaufschlagter loser Knopf (90) ausgebildet ist, der in eine Ausnehmung in dem Kunststoffblock (78) eingebettet ist, und in ein Loch in der Seitenplatte (68) des Griffes (62) eingreift.

2. Barriere nach Anspruch 1, **dadurch gekennzeichnet, dass** die Gewindestange (50) an ihrem Ende ein Friktionsteil aufweist.

3. Barriere nach Anspruch 1 oder 2, **dadurch gekennzeichnet, dass** die Gewindestange (50) eine Mutter (56) trägt.

4. Barriere nach einem der Ansprüche 1 bis 3, **dadurch gekennzeichnet, dass** das Gleitelement (52) eine seitwärts hervorstehende Querwand aufweist, an die in jeder Seite eine Ausnehmung (60) mit einer Kurvenfläche angrenzt.

5. Barriere nach Anspruch 4, **dadurch gekennzeichnet, dass** der Handgriff Vorsprünge (70) aufweist, die mit den Ausnehmungen in dem Gleitelement (52) zusammenwirken.

## Revendications

1. Barrière de sécurité pour enfants comprenant un cadre ayant un élément de base (2) présentant un élément formant montant vertical (4) et, au niveau de l'extrémité supérieure dudit élément formant montant vertical (4), une courte barre supérieure (6) s'assemblant au premier côté de la barrière de sécurité pour enfants, une porte (10) articulée au niveau de l'élément de base (2) et de l'extrémité supérieure de l'élément formant montant vertical (4) à l'opposé de la courte barre supérieure (6), de telle manière que la porte (10) comprend une autre barre supérieure (54) et un mécanisme de fermeture, ledit mécanisme de fermeture comprenant une poignée pivotante (62) ayant des plaques latérales (68), et de telle manière que ladite poignée (62) est adaptée pour déplacer une tige filetée (50) sous l'action d'un élément coulissant (52) sur lequel la tige filetée (50) est montée, de telle manière que ladite tige filetée (50) se termine par un bloc de frottement et coince le bloc de frottement contre une ouverture, **caractérisée en ce que** la poignée pivotante (62) est bloquée à l'aide d'un bouton de blocage sollicité par ressort (76, 90) disposé dans un élément ayant la forme d'un bloc en plastique plat (78) qui est fixé entre une extrémité faisant saillie de ladite barre supérieure (54) de la porte (10) et un fer plat parallèle (80) soudé à une barre avant (46), ledit bloc en plastique ayant un orifice transversal (86) définissant un axe de rotation de la poignée (62), ledit bouton de blocage (76) étant conçu d'un seul tenant avec le bloc en plastique (78) et placé directement contre les plaques latérales (68), ou étant conçu comme un bouton libre sollicité par ressort (90) logé dans une cavité dans le bloc en plastique (78) et qui s'emboîte dans un orifice dans la plaque latérale (68) de la poignée (62).

2. Barrière selon la revendication 1, **caractérisée en ce que** la tige filetée (50) présente une partie de frottement à son extrémité.

3. Barrière selon les revendications 1 et 2, **caractérisée en ce que** la tige filetée (50) porte un écrou (56).

4. Barrière selon les revendications 1 à 3, **caractérisée en ce que** l'élément coulissant (52) a une paroi transversale faisant saillie latéralement à laquelle une cavité ayant une surface de came (60) est contiguë de chaque côté.

5. Barrière selon la revendication 4, **caractérisée en ce que** la poignée présente une saillie (70) destinée à fonctionner de pair avec les cavités dans l'élément coulissant (52).
